# EUROPÄISCHE PATENTSCHRIFT

(11) **EP 3 068 208 B1**
(45) Veröffentlichungstag und Bekanntmachung des Hinweises auf die Patenterteilung: **15.07.2020**
(21) Anmeldenummer: 14796096.7
(22) Anmeldetag: 10.11.2014
(51) Int. Cl.: G05D 1/00, A01B 79/00, A01C 21/00

(54) **SYSTEM ZUM ERFASSEN VON PARAMETERN DER UMWELT UND UMGEBUNG**
SYSTEM FOR DETECTING PARAMETERS OF THE ENVIRONMENT AND SURROUNDINGS
SYSTÈME D'ACQUISITION DE PARAMÈTRES ENVIRONNEMENTAUX ET AMBIANTS

(30) Priorität: 11.11.2013 DE 102013019098
(43) Veröffentlichungstag der Anmeldung: 21.09.2016
(73) Patentinhaber: Hochschule für Technik und Wirtschaft Dresden, 01069 Dresden (DE)
(72) Erfinder: WILD, Prof. Dr. Karl, 01454 Ullersdorf (DE)
(74) Vertreter: Pfenning, Meinig & Partner mbB
(86) Internationale Anmeldenummer: PCT/EP2014/074156
(87) Internationale Veröffentlichungsnummer: WO 2015/067797

(56) Entgegenhaltungen:
- WO-A2-2012/094430
- US-A1- 2006 249 622
- US-A1- 2009 299 582
- US-A1- 2012 029 732
- US-A1- 2012 277 934
- MATKO ORSAG ET AL: "Modeling and Control of MM-UAV: Mobile Manipulating Unmanned Aerial Vehicle", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, Bd. 69, Nr. 1 - 4, 31. August 2012 (2012-08-31), Seiten 227-240, XP035138501, ISSN: 1573-0409, DOI: 10.1007/S10846-012-9723-4

## Beschreibung

Die Erfindung betrifft ein System zum Erfassen von Parametern der Umwelt und Umgebung, insbesondere für einen Einsatz in Verbindung mit landwirtschaftlichen Arbeitsmaschinen.

In der Landwirtschaft sind Sensoren zur Automatisierung verschiedener Prozesse oder zur Steigerung der Produktivität bei der Bewirtschaftung von Nutzflächen nicht mehr wegzudenken. So sind zur ortsdifferenzierten und zielgerichteten Bewirtschaftung landwirtschaftlicher Nutzflächen bereits eine Vielzahl sensorgestützter Verfahren und Vorrichtungen bekannt, die der Fachmann unter dem Begriff Präzisionsackerbau (engl. Precision Farming) kennt. Ziel ist es dabei, die Unterschiede des Bodens und der Ertragsfähigkeit innerhalb einer landwirtschaftlichen Nutzfläche zu berücksichtigen. Zur Erfassung solcher Bodenparameter bzw. Parameter der Umgebung einer zu bearbeitenden Nutzfläche können Sensoren beispielsweise direkt an einer landwirtschaftlichen Arbeitsmaschine angeordnet sein. Ungünstig ist dabei jedoch der verhältnismäßig kleine Erfassungsbereich, der sich nur auf die unmittelbare Umgebung der landwirtschaftlichen Arbeitsmaschine erstreckt. Eine nachträgliche Kartierung der Bodenverhältnisse kann sich daher schwierig gestalten.

Zur Aufklärung großer landwirtschaftlicher Nutzflächen werden daher auch mit spektroskopischen Geräten ausgestattete orbitale Satelliten eingesetzt, die beispielsweise eine Bestimmung der Bodenfeuchte oder der Wachstumsaktivität von Pflanzen ermöglichen. Ein Nachteil dieser Methode besteht jedoch darin, dass bei schlechten Wetterbedingungen, beispielsweise bei einer dichten Wolkenecke, die Sicht der Satelliten in Richtung Erde gestört werden kann. Eine Erfassung der Bodenparameter ist dann nicht mehr oder nur noch eingeschränkt möglich. An dieser Methode ist weiterhin nachteilig zu bewerten, dass ein vergleichsweise hoher technologischer Aufwand erforderlich ist, der mit hohen Kosten verbunden sein kann.

Eine andere Variante zur Erfassung von Parametern der Umwelt und Umgebung von landwirtschaftlichen Nutzflächen sieht den Einsatz von unbemannten Flugzeugen vor. So wird beispielsweise in US 2003/0130767 A1 der Einsatz eines unbemannten Flugzeugs beschrieben, das mit verschiedenen Erkennungseinrichtungen ausgestattet sein kann. Zur Erfassung der Oberflächen-Bodenparameter wird die aufzuklärende Nutzfläche in einem vorgegebenen Flugmuster von dem unbemannten Flugzeug überflogen, wobei Aufnahmen vom Boden getätigt werden sollen. Bei diesem Verfahren ist es jedoch ungünstig, dass das Flugzeug durch seinen Propellerantrieb stets in Bewegung ist, so dass Aufnahmen der aufzuklärenden Nutzfläche verzerrt werden können. Dabei ist weiterhin ungünstig, dass bei fehlerhaft oder unzureichend aufgenommenen bzw. aufgeklärten Flächen ein wiederholter Überflug der betreffenden Fläche erforderlich sein kann, so dass zusätzliche Energie verbrauchende Anflugmanöver mehrfach durchgeführt werden müssen. Eine Aufklärung von landwirtschaftlichen Nutzflächen, d.h. eine Erfassung von Parametern der Umwelt und/oder der Umgebung der Nutzfläche bleibt dabei auf eine optische Erfassung beschränkt. Eigenschaften tieferliegender Schichten der aufzuklärenden Nutzfläche können dadurch nur vage erfasst werden.

Aus US 2012/029732 A1 ist eine Erntemaschine mit einem an einem Fluggerät befestigten Sensor bekannt.

Die US 2006/0249622 A1 betrifft ein System beim dem unbenannte Fluggeräte mittels einer Plattform starten und landen können und außerdem eine Aufnahme vorhanden ist, bei der verschiedene Aktivitäten an Fluggeräten vorgenommen werden können.

Von Matko Orsag u.a. werden in "Modeling und Control of MM-UAV:Mobile Manipulating Unmanned Aerial Vehicle", Journal of intelligent and robotic systems; theory and applications - (incorporating mechatronic systems engineering), KLUVER ACADEMIC PUBLISHERS, DO, Bd. 69, Nr. 1-4, 31. August 2012, Seiten 227-240, XP035138501, ISSN: 1573-0409, DOI: 10.1007/S10846-012-9723-4 sind Möglichkeiten zur Steuerung von unbemannten Fluggeräten beschrieben.

Die Aufgabe der vorliegenden Erfindung besteht darin, ein System vorzuschlagen, mit dem die angeführten Nachteile bekannter Vorrichtungen behoben und Vorteile vereint werden können.

Die Lösung der Aufgabe wird mit einem System mit den Merkmalen des Anspruchs 1 erreicht. Vorteilhafte Ausgestaltungen oder Weiterbildungen des erfindungsgemäßen Systems können mit in untergeordneten Ansprüchen bezeichneten Merkmalen erreicht werden.

Gemäß dem Hauptanspruch wird zur Lösung der Aufgabe ein System zum Erfassen von Parametern der Umwelt und der Umgebung vorgeschlagen, das mindestens ein zum senkrechten Starten und Landen ausgebildetes unbemanntes Luftfahrzeug (ULF) aufweist. Das ULF weist eine Energiespeichereinheit und mindestens eine Aufnahme zum Transport von mindestens einer zum Erfassen von Parametern der Umwelt und Umgebung ausgebildete Funktionseinheit auf.

Ferner weist das erfindungsgemäße System zum Erfassen von Parametern der Umwelt und Umgebung mindestens eine an einem Bodenfahrzeug anordenbare Start- und Landevorrichtung für mindestens ein ULF auf, wobei die Start- und Landevorrichtung ihrerseits mindestens eine erste Vorrichtung aufweist, die zum Austausch, Laden und/oder Nachfüllen der Energiespeichereinheit von ULFs ausgebildet ist und mindestens eine zweite Vorrichtung mit einem Magazin mit mehreren verschiedenen Funktionseinheiten aufweist, die zum Austausch von Funktionseinheiten an ULFs ausgebildet ist.

Das erfindungsgemäße System zum Erfassen von Parametern der Umwelt und Umgebung zeichnet sich außerdem dadurch aus, dass das mindestens eine ULF und/oder die mindestens eine Start- und Landevorrichtung und/oder ein Bodenfahrzeug, an dem die Start- und Landevorrichtung angeordnet sein kann, eine Steuerungseinrichtung aufweist/aufweisen, mit der/denen zumindest eine autonome Bewegung des mindestens einen ULFs relativ zu der mindestens einen Start- und Landevorrichtung oder relativ zu dem Bodenfahrzeug steuer- und/oder regelbar ist, wobei von der/den mit dem mindestens einen ULF transportierten Funktionseinheit(en) erfassten Parameter der Umwelt und Umgebung zumindest an die Steuerungseinrichtung der Start- und Landevorrichtung oder des Bodenfahrzeugs drahtlos übertragbar sind.

Als Parameter der Umwelt sollen vornehmlich solche Kenngrößen verstanden werden, die eine Aufklärung der stofflichen Zusammensetzung der Luft, des Bodens und/oder Pflanzen ermöglichen. Insbesondere die stoffliche Zusammensetzung des Bodens hinsichtlich einer Verteilung und Konzentration von Produktionsmitteln, wie Düngemittel können somit als Umweltparamete angesehen werden. Als weitere Parameter der Umwelt sollen außerdem Parameter der Witterung, wie beispielsweise Luftdruck, Luftfeuchtigkeit und Temperatur verstanden werden.

Als Parameter der Umgebung sollen vornehmlich solche Kenngrößen verstanden werden, die eine topographische Aufklärung einschließlich einer Erfassung von Hindernissen, wie beispielsweise Menschen, Tiere oder Fahrzeuge, oder Grenzen ermöglichen.

Ein Vorteil der hier vorgeschlagenen Erfindung besteht zunächst darin, dass das ULF wegen seiner Fähigkeit senkrecht starten und landen zu können eine hohe Manövrierfähigkeit aufweist, wodurch ein Erfassen von Parametern der Umwelt und Umgebung sowie eine Entnahme von Probenmaterial beispielsweise vom Boden und aus der Luft erleichtert werden kann. So ist beispielsweise eine Start- und Landebahn nicht erforderlich, da ein punktgenaues Landen möglich ist. Zudem ermöglicht das ULF, das vorzugsweise als elektrisch betriebener Tri-, Quad- oder Multikopter ausgebildet sein kann, einen Schwebeflug mit variabler Geschwindigkeit. Dadurch kann die Bewegungsgeschwindigkeit zum einen an eine zur Erfassung von Parametern der Umwelt und Umgebung günstige Geschwindigkeit oder an eine Geschwindigkeit eines Bodenfahrzeugs angepasst werden. Der Schwebeflug ermöglicht außerdem eine durch die Funktionseinheit realisierte Probenentnahme von Pflanzenteilen Pflanzen.

Es ist anzumerken, dass das erfindungsgemäße System zum Erfassen von Parametern der Umwelt und Umgebung in Verbindung mit jeglichen Bodenfahrzeugen zum Einsatz kommen kann. Bevorzugt handelt es sich bei dem Bodenfahrzeug jedoch um eine landwirtschaftliche Arbeitsmaschine, wie beispielsweise einen Traktor, Feldhäcksler, Düngerstreuer oder Mähdrescher bzw. eine andere Erntemaschine.

Bei dem erfindungsgemäßen System zum Erfassen von Parametern der Umwelt und Umgebung sollten vorzugsweise sämtliche Steuerungseinrichtungen, d.h. Steuerungseinrichtungen des Bodenfahrzeugs, Steuerungseinrichtungen von ULFs und Steuerungseinrichtungen von Start- und Landevorrichtungen in funktioneller Beziehung zueinander stehen. So kann die Steuerungseinrichtung des Bodenfahrzeugs, mit der beispielsweise die Fahrtrichtung, Geschwindigkeit und/oder die Funktion des Bodenfahrzeugs steuerbar und/oder regelbar ist/sind, Steuerbefehle von der Steuerungseinrichtung eines ULFs empfangen, wobei die Steuerungsbefehle eines ULFs von Parametern der Umwelt und Umgebung abhängig sein kann, die mit der von dem betreffenden ULF transportierten Funktionseinheit erfasst worden sind.

Ferner zeichnet sich das System durch eine hohe Flexibilität und Ausdauer aus, da sowohl die Funktionseinheit eines ULFs als auch dessen Energiespeichereinheit an der Start- und Landevorrichtung austauschbar sind bzw. die Energiespeichereinheit nachgefüllt oder nachgeladen werden kann. So kann die Energiespeichereinheit als austauschbarer Akkumulator oder, für den Fall, dass das ULF eine Brennstoffzelle oder einen Verbrennungsmotor bzw. ein Verbrennungstriebwerk aufweist, als nachfüllbarer Gas- oder Flüssigkeitstank ausgebildet sein, der ebenfalls austauschbar ist.

Bei einer Anordnung der Start- und Landevorrichtung an einem Bodenfahrzeug kann eine mobile Versorgung von ULFs mit Energie und verschiedenen Funktionseinheiten erfolgen. Dies kann insbesondere bei einem Dauereinsatz eines Bodenfahrzeugs günstig sein, bei dem eine stetige Information mit Parametern der Umwelt und Umgebung gewünscht ist.

Die Austauschbarkeit der Funktionseinheit ermöglicht außerdem eine Gewichtsreduzierung von ULFs, da nur tatsächlich benötigte Funktionseinheiten transportiert werden müssen. Vorteilhafterweise kann dadurch der Energieverbrauch gesenkt bzw. die Flugzeit eines ULFs verlängert werden. Für einen Wechsel der Funktionseinheiten genügt es die Start- und Landevorrichtung anzufliegen, wobei aus dem Magazin eine andere oder eine weitere Funktionseinheit ausgewählt werden kann.

Ein Wechsel der Energiespeichereinheit und/oder der Funktionseinheit von ULFs kann im Wesentlichen automatisiert erfolgen.

An einer Start- und Landevorrichtung kann mindestens eine Fixiereinrichtung für ein ULF vorhanden sein. Diese kann elektromagnetisch aktiviert werden, indem Klemmelemente an einem ULF angreifen. Dies kann bevorzugt an mindestens einem Fuß eines ULF's erfolgen. Besonders vorteilhaft kann nach oder bei erfolgter Fixierung eine Verbindung zu einer Versorgung des jeweiligen ULF's mit Energie hergestellt werden. Dabei können zum Laden eines Elektroenergiespeichers die entsprechenden Ladekontakte zwischen ULF und der Start- und Landevorrichtung miteinander verbunden werden. Dabei können Ladekontakte unmittelbar an der Fixiereinrichtung angeordnet sein.

Bei einem Nachfüllen von Gas oder Flüssigkeit in einen Tank eines ULF's kann ein Anschlussstutzen an der Start- und Landevorrichtung genutzt werden, in den ein komplementär ausgebildeter Anschlussstutzen des jeweiligen ULF's einführbar ist, wenn das ULF mit der Fixiereinrichtung an der Start- und Landevorrichtung befestigt ist.

Die Verbindung zum Austausch, Laden oder Nachfüllen der Energiespeichereinheit kann mit dem Lösen der Fixiereinrichtung einfach wieder getrennt werden.

Sollte ein Transport mehrerer Funktionseinheiten erforderlich sein, der aufgrund des Gewichts der Funktionseinheiten von einem ULF allein nicht bewältigbar ist, können mehrere ULFs eingesetzt werden, auf die die zu transportierenden Funktionseinheiten aufgeteilt werden. Zum gemeinsamen Betrieb mehrerer auf mehrere ULFs verteilte Funktionseinheiten können ULFs untereinander bzw. mit der Start- und Landevorrichtung und/oder mit dem Bodenfahrzeug kommunizieren. Hierzu können die ULFs, Start- und Landevorrichtung und das Bodenfahrzeug eine Drahtloskommunikationseinrichtung mit Sende- und Empfangseinheit aufweisen, die mit der/den jeweiligen Steuerungseinrichtung(en) der ULFs, der Start- und Landevorrichtung und/oder dem Bodenfahrzeug elektrisch verbunden sind.

Gemäß einer vorteilhaften Ausgestaltung des erfindungsgemäßen Systems kann/können die Steuerungseinrichtung(en) eine vorzugsweise optische Zielverfolgungseinrichtung zur Verfolgung mobiler Bezugs- und/oder Zielkoordinaten aufweisen. Dabei ist es besonders vorteilhaft, wenn eine Zielverfolgungseinichtung zur Verfolgung mobiler Bezugs- und/oder Zielkoordinaten als Bestandteil der Steuerungseinrichtung eines ULFs ausgebildet ist, so dass sich ein so ausgebildetes ULF an einem mobilen bzw. fahrenden Bodenfahrzeug bzw. an der an dem Bodenfahrzeug angeordneten Start- und Landevorrichtung orientieren kann. Vorzugsweise die Start- und Landevorrichtung kann somit als Zentrum eines Bezugssystems zur Koordinierung von ULFs dienen. Ein so ausgebildetes ULF benötigt kein GNSS und ist auch nicht von GPS-Daten abhängig, so dass entsprechende Navigationseinrichtungen eingespart werden können.

Sollten dennoch GPS-Daten erforderlich sein, können diese von einem an dem Bodenfahrzeug bzw. an der Start- und Landevorrichtung angeordneten Navigationssystem/GNSS über die Drahtloskommunikationseinrichtung an ein ULF übertragen werden.

Es ist jedoch nicht ausgeschlossen, dass ein ULF ebenfalls mit einem eigenständigen Navigationssystem ausgebildet ist.

Ferner kann ein ULF zur Vermeidung von Kollisionen äußerlich angeordnete Näherungssensoren aufweisen. In diesem Zusammenhang ist es außerdem günstig, wenn ein ULF einen Höhenmesser aufweist. Ein solcher Höhenmesser kann vorzugsweise lasergestützt ausgebildet sein.

Bei einer weiteren Ausführungsform kann es vorgesehen sein, dass die Zielverfolgung Bestandteil der Steuereinrichtung der Start- und Landevorrichtung und/oder der Steuereinrichtung des Bodenfahrzeugs ist. In diesem Fall kann die autonome Steuerung von ULF auch von der Start- und Landevorrichtung bzw. dem Bodenfahrzeug erreicht werden, indem die Position der Start- und Landevorrichtung bzw. des Bodenfahrzeugs, d.h. die jeweiligen Bezugskoordinaten stetig an die Steuerungseinrichtung des betreffenden ULFs übermittelt werden. Eine Interpretation der Bezugskoordinaten kann dabei von der Steuerungseinheit des betreffenden ULFs selbst vorgenommen werden. Andernfalls können Steuerungsbefehle zur Bewegung des ULFs auch von der Steuerungseinrichtung der Start- und Landevorrichtung und/oder von der Steuerungseinrichtung des Bodenfahrzeugs übertragen werden

Die Zielverfolgungseinrichtung kann beispielsweise mit einem lasergestützten elektronischen Tachymeter oder einem Laser-Tracking-System realisiert sein.

Gemäß einer weiteren vorteilhaften Ausgestaltung des erfindungsgemäßen Systems können sämtliche Steuerungseinrichtungen des Systems von dem Bodenfahrzeug aus bedient werden. So kann an einem Bodenfahrzeug bzw. einer Fahrerkabine eines Bodenfahrzeugs ein Terminal angeordnet sein, über das Befehle zur Steuerung von ULFs und Befehle zur Steuerung und/oder Regelung von mit ULF transportierten Funktionseinheiten eingegeben werden können.

Die zum Erfassen von Parametern der Umwelt und Umgebung ausgebildeten Funktionseinheiten können jeweils mindestens einen Sensor und/oder Aktor und/oder eine Sensor/Aktor-Kombination aufweisen. So können die Funktionseinheiten beispielsweise eine Kamera, eine Infrarotkamera, spektrometrische Geräte, hyperspektrale Instrumente, Ultraschalldistanzsensoren, ein Radar, ein Lidar und/oder ein Röntgengerät aufweisen. Ferner können die Funktionseinheiten auch Leuchtmittel oder Werkzeuge, wie beispielsweise einen Greifarm mit Schere, einen Bohrer, einen Probenbehälter oder ein Penetrometer aufweisen. Zur Markierung von Objekten, Gegenständen oder Wegmarken können die Funktionseinheiten auch entsprechende Markierungsmittel aufweisen, die beispielsweise mit RFID-Tags oder mittels einer Farbspraydose realisiert sind.

Denkbar sind außerdem Vergrämungsmittel wie Sirenen oder Hupen als Bestandteil von Funktionseinheiten.

Besonders günstig ist es, wenn eine Funktionseinheit als Probennehmer ausgebildet ist, der einen Greifarm zur Aufnahme von Probenmaterial und einen für das Probenmaterial vorgesehenen Probenbehälter aufweist. Der Greifarm kann auch zum festhalten oder fixieren des ULFs an einer Position verwendet werden. In diesem Zusammenhang kann die Funktionseinheit zusätzlich mit einer Trennvorrichtung zum Abtrennen oder Zerteilen von Probenmaterial ausgestattet sein. Die als Probennehmer ausgebildete Funktionseinheit kann ferner auch einen Bohrer aufweisen, mit dem Bodenproben aus tieferliegenden Schichten an die Oberfläche gefördert werden können. Auf diese Weise können beispielsweise aus der Luft optisch erfasste Parameter des Bodens verglichen und dabei auf ihre Richtigkeit überprüft werden.

Die Aufnahme zum Transport der mindestens einen Funktionseinheit eines ULFs kann neben Mitteln zur mechanischen Befestigung mindestens einer Funktionseinheit auch Mittel zur informations-, energie- und/oder steuerungstechnischen Kopplung zwischen dem ULF und der Funktionseinheit aufweisen. So kann eine transportierte Funktionseinheit mit Energie von der Energiespeichereinheit des ULFs versorgt werden. Ferner kann mit der Steuerungseinrichtung der ULFs auf die Funktion der Funktionseinheit zugegriffen werden, die dadurch gesteuert werden kann.

Für eine Fortbewegung von ULF's am Boden, relativ zum Bodenfahrzeug und/oder zur Start- und Landevorrichtung können ULF's jeweils ein Fahrwerk aufweisen, das von ULF's bedarfsweise aufgenommen werden kann. Vorzugsweise kann ein solches Fahrwerk an der Start- und Landevorrichtung von einem ULF aufgenommen werden und einen vorzugsweise elektrischen Antrieb aufweisen, der von der Einergiespeichereinheit eines ULF's mit Energie versorgt werden kann. Eine Steuerung eines Fahrwerks eines ULF's kann über die bordeigene Steuerungseinrichtung des ULF's bzw. über Steuerungseinrichtungen des Bodenfahrzeugs oder der Start- und Landevorrichtung erfolgen. Auf diese Weise können Untersuchungen, die beispielsweise ausschließlich am Boden stattfinden, energiesparend durchgeführt werden.

Gemäß einer weiteren vorteilhaften Ausgestaltung des erfindungsgemäßen Systems kann es vorgesehen sein, dass das ULF und/oder die Start- und Landevorrichtung und/oder das Bodenfahrzeug eine Analyse- und Auswerteeinrichtung aufweist/aufweisen, mit denen von Funktionseinheiten erfasste Parameter der Umwelt und Umgebung und insbesondere Probenmaterial analysiert und ausgewertet werden können. Dadurch können Auswertungen und Analysen von erfassten Parametern bzw. von aufgenommenem Probenmaterial unmittelbar erfolgen. So kann mit dem Bodenfahrzeug entsprechend zeitnah und vorausschauend reagiert werden. Mit anderen Worten, die Fahrtrichtung, Geschwindigkeit und/oder die Funktion eines vorzugsweise landwirtschaftlichen Bodenfahrzeugs kann in Anhängigkeit der erfassten Parameter bzw. analysierten Parameter gesteuert und/oder geregelt werden.

Zur Aufbewahrung von Probenmaterial kann vorzugsweise an der Start- und Landevorrichtung ein klimatisierter Probenbehälter angeordnet sein, mit dem der Zustand des Probenmaterials bei Probenentnahme temporär aufrecht erhalten werden kann, bis eine Analyse bzw. Auswertung, beispielsweise durch die Analyse- und Auswerteeinheit erfolgen kann.

Die Start- und Landevorrichtung kann auch als Halterung für ein oder mehrere ULFs dienen, falls diese nicht in Betrieb sind. Befestigungsmittel sichern die ULFs dann an der Start- und Landevorrichtung.

Weitere Ausführungsbeispiele der Erfindung werden nachfolgend anhand einer Figur näher erläutert.

Es zeigt:

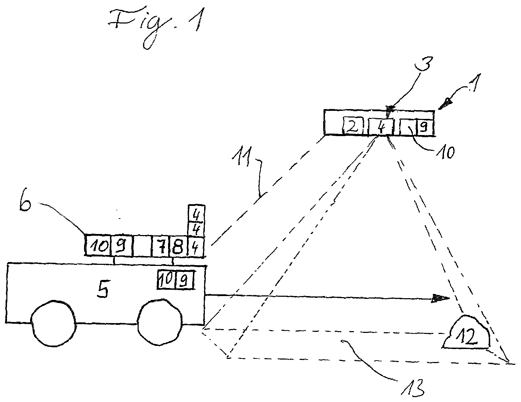

- FIG. 1: eine Prinzipskizze des erfindungsgemäßen Systems zur Erfassung von Parametern der Umwelt und Umgebung in einer Seitenansicht.

Die FIG. 1 zeigt eine Prinzipskizze des erfindungsgemäßen Systems zum Erfassen von Parametern in der Umwelt und Umgebung in Verbindung mit einer landwirtschaftlichen Arbeitsmaschine als Bodenfahrzeug 5, die sich in Pfeilrichtung bewegt. Dargestellt ist ein als elektrisch betriebener Quadkopter ausgebildetes unbemanntes Luftfahrzeug (ULF) 1, das eine Energiespeichereinheit 2 und mindestens eine Aufnahme 3 zum Transport von mindestens einer zum Erfassen von Parametern der Umwelt und Umgebung ausgebildeten Funktionseinheit 4 aufweist. Dargestellt ist weiterhin eine an dem Bodenfahrzeug 5 angeordnete Start- und Landevorrichtung 6 für das ULF 1, wobei an der Start- und Landevorrichtung 6 eine erste Vorrichtung 7 zum Austausch, Laden und/oder Nachfüllen der Energiespeichereinheit 2 des ULFs 1 ausgebildet ist. Mit dem Bezugszeichen 8 ist eine zweite Vorrichtung mit einem Magazin mit mehreren, vorzugsweise verschiedenen, Funktionseinheiten 4 gekennzeichnet, die zum Austausch von Funktionseinheiten 4 an dem ULF 1 ausgebildet ist.

Wie der Fig. 1 weiterhin zu entnehmen ist, weist das ULF 1, die Start- und Landevorrichtung 6 und das Bodenfahrzeug 5 eine Steuerungseinrichtung 9 auf, die zur autonomen Bewegung des ULF 1 relativ zur Start- und Landevorrichtung 6 bzw. relativ zu dem Bodenfahrzeug 5 steuerbar oder regelbar ist.

Gestrichelt dargestellt ist eine zwischen dem ULF 1 und der Start- und Landevorrichtung 6 und/oder dem Bodenfahrzeug 5 hergestellte Drahtloskommunikationsverbindung 11, über die von der mit dem ULF 1 transportierten Funktionseinheit 4 erfassten Parameter der Umwelt und Umgebung an die Steuerungseinrichtung 9 der Start- und Landevorrichtung 6, sowie an die Steuerungseinrichtung 9 des Bodenfahrzeugs 5 übertragbar sind.

Über die Drahtloskommunikationsverbindung 11 kann ferner auch eine Steuerung des ULFs 1 und der von dem ULF 1 transportierten Funktionseinheit 4 erreicht werden. Dabei kann im Bodenfahrzeug 5 ein Terminal vorgesehen sein mit dem auf die Steuerungseinrichtung 9 des ULFs 1 zugegriffen werden kann.

Zur autonomen Steuerung weist die Steuerungseinrichtung 9 des ULFs 1 eine laserbasierte Zielverfolgungseinrichtung (10) auf, mit der sich das ULF 1 an der Start- und Landevorrichtung 6 als Bezugspunkt orientiert. Im vorliegenden Beispiel ist für eine Verfolgung des ULFs 1 eine entsprechende laserbasierte Zielverfolgungseinrichtung 10 auch an der Start- und Landevorrichtung 6 angeordnet.

Mit dem Bezugszeichen 12 ist ein in Fahrtrichtung der landwirtschaftlichen Arbeitsmaschine 5 auftretendes Hindernis gekennzeichnet, das von der Funktionseinheit 4, die im vorliegenden Beispiel als Kamera ausgebildet ist, vorausschauend erfasst wird. Dabei ist der Erfassungsbereich der Funktionseinheit 4 gestrichelt dargestellt und mit dem Bezugszeichen 13 versehen. Die von der Kamera der Funktionseinheit 4 erfassten Bilder werden über die Drahtloskommunikationsverbindung 11 an die Steuerungseinrichtung 9 der landwirtschaftlichen Arbeitsmaschine 5 übertragen, die dort beispielsweise über einen Monitor, der in der Fahrerkabine angebracht ist, dargestellt werden können. Gleichzeitig nimmt die Steuerungseinrichtung 9 der landwirtschaftlichen Arbeitsmaschine 5 eine Korrektur der Fahrtrichtung vor, um das Hindernis 12 zu umfahren.

Für den Fall, dass es sich bei dem Hindernis 12 um einen Gegenstand handelt, der aufgrund seiner Größe oder seines Gewichts von einem ULF getragen werden kann, kann das ULF selbstständig vorausfliegen und mit einer Funktionseinheit 4, die mit einem Greifer ausgebildet ist, aus dem Weg geräumt werden. Eine mit Greifer ausgebildete Funktionseinheit 4 kann aus dem Magazin der Vorrichtung 8 an der Start- und Landevorrichtung 6 an dem ULF angebracht werden.

Eine weitere Möglichkeit zur Überwindung des Hindernisses 12 besteht darin, dass das ULF 1 das Hindernis 12 mit einer Markierung, beispielsweise mit einem RFID-Tag oder einer Laser-Tag oder im einfachsten Fall mit einer Farbmarkierung versieht, die von einem weiteren ULF, das eine zum Transport von Gegenständen ausgebildete Funktionseinheit aufweist, erkannt werden kann. Das weitere ULF kann dann vorausfliegen und den Gegenstand 12 aus dem Weg räumen.

Im vorliegenden Beispiel weist die Steuerungseinrichtung 9 des ULF 1 eine optische Zielverfolgungsvorrichtung 10 zur Verfolgung der Bewegung der landwirtschaftlichen Arbeitsmaschine 5 auf. Dabei stellt die landwirtschaftliche Arbeitsmaschine das Zentrum des Bezugssystems an dem sich die Bewegungen des ULF 1 orientieren.

Im vorliegenden Beispiel ist die Bewegungsrichtung bzw. die Position des ULF 1 im Vorausflug relativ zur landwirtschaftlichen Arbeitsmaschine 5 vorgesehen.

Im Folgenden werden weitere Ausführungsbeispiele erläutert, die die Vorteile des erfindungsgemäßen Systems verdeutlichen.

Das ULF 1 kann zu Wartungsflügen zur Überprüfung der Funktionalität der landwirtschaftlichen Arbeitsmaschine 5 oder zu Erkundungsflügen eingesetzt werden. Hierzu kann die Steuerungseinrichtung 9 des ULFs 1 auf Wartungspläne und/oder Kartenmaterial der Steuerungseinrichtung 9 der landwirtschaftlichen Arbeitsmaschine 5 zugreifen, wobei die der Steuerungseinrichtung 9 der landwirtschaftlichen Arbeitsmaschine 5 mit dem Internet verbunden sein kann, so dass Wartungspläne der landwirtschaftlichen Arbeitsmaschine 5 und/oder Kartenmaterial der Umgebung online bezogen werden können.

Zur Realisierung der genannten Wartungspläne kann das ULF 1 vorgegebene Bezugskoordinaten oder Markierungen an der landwirtschaftlichen Arbeitsmaschine 5 anfliegen, die von einer Kamera, die Bestandteil der transportierten Funktionseinheit 4 ist, erkannt werden. Solche Bezugskoordinaten oder Markierungen können beispielsweise an einem Mähwerk eines Mähdreschers als landwirtschaftliche Arbeitsmaschine 5 vorhanden sein. In diesem Zusammenhang ist es günstig, wenn das ULF und/oder die Funktionseinheit 4 des ULFs 1 einen Saugnapf oder einen Greifer zur Halterung des ULFs 1 aufweist, so dass das ULF 1 an einer Wartungs- bzw. Beobachtungsposition an der landwirtschaftlichen Arbeitsmaschine 5 fixiert werden kann, wobei eine Antriebseinheit des ULFs 1 gedrosselt oder vollständig abgeschaltet werden kann.

## Patentansprüche

1. System zum Erfassen von Parametern der Umwelt und Umgebung, mit mindestens einem zum senkrechten Starten und Landen ausgebildeten unbemannten Luftfahrzeug (ULF) (1), das eine Energiespeichereinheit (2) und mindestens eine Aufnahme (3) zum Transport von mindestens einer zum Erfassen von Parametern der Umwelt und Umgebung ausgebildeten Funktionseinheit (4) aufweist; und
mindestens einer an einem Bodenfahrzeug (5) anordenbaren Start-und Landevorrichtung (6) für das mindestens eine ULF (1), die mindestens eine erste Vorrichtung (7) aufweist, die zum Austausch, Laden und/oder Nachfüllen der Energiespeichereinheit von ULFs ausgebildet ist, wobei
die mindestens eine Start- und Landevorrichtung (6) und/oder das Bodenfahrzeug (5) jeweils eine Steuerungseinrichtung (9) aufweist/aufweisen, mit der/denen zumindest eine autonome Bewegung des mindestens einen ULFs (1) relativ zu der mindestens einen Start- und Landevorrichtung (6) oder relativ zu dem Bodenfahrzeug (5) steuer- und/oder regelbar ist, wobei von der/den mit dem mindestens einen ULF (1) transportierten Funktionseinheit(en) (4) erfassten Parameter der Umwelt und Umgebung zumindest an die Steuerungseinrichtung (9) der Start- und Landevorrichtung (6) und/oder des Bodenfahrzeugs (5) drahtlos übertragbar sind,
**dadurch gekennzeichnet, dass**
das System mindestens eine zweite Vorrichtung (8) mit einem Magazin zur temporären Aufnahme von Funktionseinheiten (4) aufweist, die zum Austausch von mehreren verschiedenen Funktionseinheiten (4) an ULFs (1) ausgebildet ist, wobei mindestens eine Funktionseinheit (4) als Probennehmer ausgebildet ist, der einen Greifarm zur Aufnahme von Probenmaterial und einen Probenbehälter aufweist.

2. System nach Anspruch 1, **dadurch gekennzeichnet, dass** das ULF (1) ein vorzugsweise elektrisch betriebener Tri-, Quad- oder Multicopter ist.

3. System nach einem der vorhergehenden Ansprüche, **dadurch gekennzeichnet, dass** die Energiespeichereinheit ein Akkumulator und/oder ein nachfüllbarer Gas- oder Flüssigkeitstank ist.

4. System nach einem der vorhergehenden Ansprüche, **dadurch gekennzeichnet, dass** das ULF (1) und die Start- und Landevorrichtung (6) oder das Bodenfahrzeug (5) jeweils eine Drahtloskommunikationseinrichtung aufweisen.

5. System nach einem der vorhergehenden Ansprüche, **dadurch gekennzeichnet, dass** die Steuerungseinrichtung(en) (9) eine Zielverfolgungseinrichtung (10) zur Verfolgung mobiler Bezugs- und/oder Zielkoordinaten aufweist/aufweisen.

6. System nach einem der vorhergehenden Ansprüche, **dadurch gekennzeichnet, dass** die Steuerungseinrichtung(en) (9) von dem Bodenfahrzeug (5) aus bedienbar ist/sind und zur Steuerung des ULFs (1) und zur Steuerung und/oder Regelung einer mit dem ULF (1) transportierten Funktionseinheit (4) ausgebildet ist/sind.

7. System nach einem der vorhergehenden Ansprüche, **dadurch gekennzeichnet, dass** eine Funktionseinheit (4) mindestens einen Sensor und/oder Aktor und/oder eine Sensor/Aktor-Kombination aufweist.

8. System nach einem der vorhergehenden Ansprüche, **dadurch gekennzeichnet, dass** das ULF (1) und/oder die Start- und Landevorrichtung (6) und/oder ein Bodenfahrzeug (5) eine Analyse- und Auswerteinrichtung für erfasste Parameter der Umwelt und/oder Umgebung und insbesondere für Probenmaterial aufweist/aufweisen.

9. System nach einem der vorhergehenden Ansprüche, **dadurch gekennzeichnet, dass** das Bodenfahrzeug (5) eine landwirtschaftliche Arbeitsmaschine ist, deren Fahrtrichtung, Geschwindigkeit und/oder Funktion in Abhängigkeit der von Funktionseinheiten (4) erfassten Parametern der Umwelt und Umgebung steuer- und/oder regelbar ist/sind.

## Claims

1. System for capturing parameters of the environment and surroundings, having
at least one unmanned aircraft (1) which is designed to start and land vertically and has an energy storage unit (2) and at least one receptacle (3) for transporting at least one functional unit (4) designed to capture parameters of the environment and surroundings; and
at least one starting and landing apparatus (6) for the at least one unmanned aircraft (1), which starting and landing apparatus can be arranged on a ground vehicle (5) and has at least one first apparatus (7) which is designed to replace, charge and/or refill the energy storage unit of unmanned aircraft, wherein
the at least one starting and landing apparatus (6) and/or the ground vehicle (5) respectively has/have a control device (9) which can be used to control and/or regulate at least one autonomous movement of the at least one unmanned aircraft (1) relative to the at least one starting and landing apparatus (6) or relative to the ground vehicle (5), wherein parameters of the environment and surroundings which are captured by the functional unit(s) (4) transported using the at least one unmanned aircraft (1) can be wirelessly transmitted at least to the control device (9) of the starting and landing apparatus (6) and/or of the ground vehicle (5),
**characterized in that**
the system has at least one second apparatus (8) having a magazine for temporarily accommodating functional units (4), which second apparatus is designed to replace a plurality of different functional units (4) on unmanned aircraft (1), wherein at least one functional unit (4) is in the form of a sampler which has a gripping arm for picking up sample material and a sample container.

2. System according to Claim 1, **characterized in that** the unmanned aircraft (1) is a preferably electrically operated tricopter, quadcopter or multicopter.

3. System according to one of the preceding claims, **characterized in that** the energy storage unit is a rechargeable battery and/or a refillable gas or liquid tank.

4. System according to one of the preceding claims, **characterized in that** the unmanned aircraft (1) and the starting and landing apparatus (6) or the ground vehicle (5) respectively has/have a wireless communication device.

5. System according to one of the preceding claims, **characterized in that** the control device(s) (9) has/have a tracking device (10) for tracking mobile reference and/or target coordinates.

6. System according to one of the preceding claims, **characterized in that** the control device(s) (9) can be operated from the ground vehicle (5) and is/are designed to control the unmanned aircraft (1) and to control and/or regulate a functional unit (4) transported using the unmanned aircraft (1) .

7. System according to one of the preceding claims, **characterized in that** a functional unit (4) has at least one sensor and/or actuator and/or a sensor/actuator combination.

8. System according to one of the preceding claims, **characterized in that** the unmanned aircraft (1) and/or the starting and landing apparatus (6) and/or a ground vehicle (5) has/have an analysis and evaluation device for captured parameters of the environment and/or surroundings and, in particular, for sample material.

9. System according to one of the preceding claims, **characterized in that** the ground vehicle (5) is an agricultural work machine, the direction of travel, speed and/or function of which can be controlled and/or regulated on the basis of the parameters of the environment and surroundings which are captured by functional units (4).

## Revendications

1. Système d'acquisition de paramètres environnementaux et ambiants, avec au moins un aéronef sans pilote (ASP) (1) apte à décoller et atterrir verticalement, qui comporte une unité d'accumulation d'énergie (2) et au moins un logement (3) pour le transport d'au moins une unité fonctionnelle (4) configurée pour l'acquisition de paramètres environnementaux et ambiants ; et
au moins un dispositif de décollage et d'atterrissage (6), destiné à l'au moins un ASP (1) et pouvant être disposé sur un véhicule terrestre (5), qui comporte au moins un premier dispositif (7) qui est configuré pour remplacer, charger et ravitailler l'unité d'accumulation d'énergie d'ASP,
l'au moins un dispositif de décollage et d'atterrissage (6) et/ou le véhicule terrestre (5) comportant respectivement un équipement de commande (9) avec lequel/lesquels au moins un mouvement autonome de l'au moins un ASP (1) par rapport à l'au moins un dispositif de décollage et d'atterrissage (6) ou par rapport au véhicule terrestre (5) peut être commandé et/ou régulé, des paramètres environnementaux et ambiants acquis par la/les unités fonctionnelles (4) transportée(s) avec l'au moins un ASP (1) pouvant être transmis sans fil au moins à l'équipement de commande (9) du dispositif de décollage et d'atterrissage (6) et/ou du véhicule terrestre (5),
**caractérisé en ce que**
le système comporte au moins un deuxième dispositif (8) qui est doté d'un magasin destiné à recevoir temporairement des unités fonctionnelles (4) et qui est configuré pour remplacer plusieurs unités fonctionnelles (4) différentes sur des ASP (1), au moins une unité fonctionnelle (4) étant configurée en tant que dispositif d'échantillonnage qui comporte un bras préhenseur pour la réception d'échantillons de matériau et un conteneur d'échantillons.

2. Système selon la revendication 1, **caractérisé en ce que** l'ASP (1) est un tricoptère, quadricoptère ou multicoptère de préférence à entraînement électrique.

3. Système selon l'une des revendications précédentes, **caractérisé en ce que** l'unité d'accumulation d'énergie est un accumulateur et/ou un réservoir de gaz ou de liquide rechargeable.

4. Système selon l'une des revendications précédentes, **caractérisé en ce que** l'ASP (1) et le dispositif de décollage et d'atterrissage (6) ou le véhicule terrestre (5) comportent respectivement un équipement de communication sans fil.

5. Système selon l'une des revendications précédentes, **caractérisé en ce que** le/les équipements de commande (9) comporte/comportent un équipement de poursuite de cible (10) destiné à la poursuite de coordonnées de référence et/ou de cible mobiles.

6. Système selon l'une des revendications précédentes, **caractérisé en ce que** le/les équipements de commande (9) peut/peuvent être manœuvré(s) à partir du véhicule terrestre (5) et est/sont configuré(s) pour la commande de l'ASP (1) et pour la commande et/ou la régulation d'une unité fonctionnelle (4) transportée avec l'ASP (1).

7. Système selon l'une des revendications précédentes, **caractérisé en ce qu'**une unité fonctionnelle (4) comporte au moins un capteur et/ou un actionneur et/ou une combinaison capteur/actionneur.

8. Système selon l'une des revendications précédentes, **caractérisé en ce que** l'ASP (1) et/ou le dispositif de décollage et d'atterrissage (6) et/ou un véhicule terrestre (5) comporte/comportent un équipement d'analyse et d'évaluation pour des paramètres environnementaux et ambiants acquis et en particulier pour des échantillons de matériau.

9. Système selon l'une des revendications précédentes, **caractérisé en ce que** le véhicule terrestre (5) est une machine agricole dont la direction de déplacement, la vitesse et/ou la fonction peut/peuvent être commandée(s) et/ou régulée(s) en fonction des paramètres environnementaux et ambiants acquis par des unités fonctionnelles (4).
